# EUROPÄISCHE PATENTSCHRIFT

(11) **EP 2 694 835 B1**
(45) Veröffentlichungstag und Bekanntmachung des Hinweises auf die Patenterteilung: **02.03.2016**
(21) Anmeldenummer: 12711785.1
(22) Anmeldetag: 23.03.2012
(51) Int. Cl.: F16D 65/12

(54) **BREMSSCHEIBE FÜR EIN LANDFAHRZEUG SOWIE LANDFAHRZEUG, INSBESONDERE MIT EINER SOLCHEN BREMSSCHEIBE**
BRAKE DISC FOR A LAND VEHICLE, AND LAND VEHICLE, IN PARTICULAR WITH A BRAKE DISC OF THIS TYPE
DISQUE DE FREIN POUR VÉHICULE ROUTIER AINSI QUE VÉHICULE ROUTIER, EN PARTICULIER VÉHICULE ÉQUIPÉ D'UN TEL DISQUE DE FREIN

(30) Priorität: 04.04.2011 DE 102011016029
(43) Veröffentlichungstag der Anmeldung: 12.02.2014
(73) Patentinhaber: Wabco Radbremsen GmbH, 68229 Mannheim (DE)
(72) Erfinder: KLOSS, Eugen, 64625 Bensheim (DE)
(74) Vertreter: Leinweber & Zimmermann
(86) Internationale Anmeldenummer: PCT/EP2012/001292
(87) Internationale Veröffentlichungsnummer: WO 2012/136316

(56) Entgegenhaltungen:
- EP-A2- 1 903 247
- WO-A1-02/087901
- WO-A1-2004/102029
- US-A1- 2005 099 058

## Beschreibung

Die Erfindung betrifft eine Bremsscheibe für ein Landfahrzeug, insbesondere ein Nutzfahrzeug, nach dem Oberbegriff von Anspruch 1.

Bremsscheiben der oben genannten Art sind bekannt, beispielsweise aus der US 2005/0099058 A1. Dabei weist der Reibring beidseitig Reibflächen auf. An den Reibring angeschlossen erstreckt sich axial entlang der Drehachse ein Scheibentopf, von dem sich in Radialrichtung der Scheibenflansch erstreckt.

Der Reibring, der Scheibentopf und der Scheibenflansch können paarweise oder alle drei einstückig miteinander ausgebildet sein. Sie sind beispielsweise als Gußteil aus Grauguß bzw. Gußeisen gefertigt.

Der Scheibenflansch weist dabei beispielsweise mehrere (Gewinde-)Bohrungen auf, die über seinen Umfang verteilt sind. Sie erstrecken sich in der Regel in Axialrichtung. Die (Gewinde-)Bohrungen dienen dazu, den Scheibenflansch an die Radnabe des Fahrzeugs anzuflanschen, und zwar in der Regel mittels Schrauben, die beispielsweise in die Gewindebohrungen eingeschraubt werden.

Herkömmlicherweise ist sowohl die Flanschfläche des Scheibenflansches als auch eine Flanschfläche der Radnabe eben ausgestaltet, wobei sich beide genannten Flanschflächen senkrecht zu der Drehachse erstrecken.

Über die oben erwähnten Axialverschraubungen erfolgt bei Anflanschen der Bremsscheibe an den Radflansch ein Reibschluß zwischen den beiden Flanschflächen, so daß die beim Bremsen auftretenden Momente im wesentlichen über den Reibschluß in den Kontaktzonen auf die Radnabe übertragen werden.

Um diesen Reibschluß ausreichend zu gestalten, insbesondere im Falle von Nutzfahrzeugbremsscheiben, werden entsprechend der Scheibengröße und den Schraubendimensionen hohe Anziehdrehmomente verwendet. Dennoch ist es nicht immer auszuschließen, daß der Reibschluß nicht ausreicht. In einem solchen Falle kommt es wegen des Spiels zwischen der Innenwand der Bohrungen, durch die sich die Schrauben erstrecken, zu Relativbewegungen zwischen der Scheibe und der Radnabe, beispielsweise wenn hohe Bremsmomente bei Wechsel zwischen Vorwärts- und Rückwärtsfahrt auf die Bremsscheibe einwirken, so daß der Reibschluß überwunden wird.

Infolge hoher Anforderungen an die Bremsscheibe bauen sich beim Einsatz insbesondere im Übergangsbereich zwischen dem Scheibenflansch und dem Scheibentopf, also etwa im radial innen liegenden Bereich des Scheibenflansches extreme Druckspannungen auf. Bei der Befestigung mit sich in Bohrungen erstreckenden Schrauben liegt dieser kritische Bereich üblicherweise radial innen bezüglich der Bohrungen. Die Folge ist ein verstärkter Verschleiß in Form von An- bzw. Durchrissen vorwiegend im Bereich des Innenradius der Flanschfläche des Scheibenflansches.

Wegen des begrenzten zur Verfügung stehenden Bauraums ist eine Stärkung der Bremsscheibe in dem genannten kritischen Bereich, beispielsweise durch erhöhten Materialeinsatz, nicht möglich. Darüber hinaus würde ein derartiger verstärkter Materialeinsatz auch zu einer entsprechenden Gewichtserhöhung führen.

Die DE 10 2007 041 661 A1 zeigt eine Bremsscheibe mit einem Reibring, einem Scheibentopf und einem Scheibenflansch. Der Flansch ist in Umfangsrichtung segmentiert. Erste Segmentbereiche wechseln sich mit zweiten Segmentbereichen ab. Die zweiten Segmentbereiche sind axial zurückversetzt gegenüber jener Ebene, in der sich die ersten Segmentbereiche befinden.

Der Erfindung liegt die Aufgabe zugrunde, die Bremsscheibe der eingangs genannten Art derart weiterzubilden, daß sie auch höheren Anforderungen an die Belastbarkeit mit hohen Bremsmomenten Rechnung trägt und gleichzeitig nur minimalen Bauraum einnimmt und nur minimales Gewicht hat.

Erfindungsgemäß wird die gestellte Aufgabe mit einer Bremsscheibe nach Anspruch 1 gelöst.

Mit anderen Worten steht der radial außen liegende Bereich der Flanschfläche axial gegenüber dem radial innen liegenden Bereich der Flanschfläche vor. Wird die Bremsscheibe nun an eine Radnabe angeflanscht, so wird der radial außen liegende Bereich des Scheibenflansches stärker verspannt als der radial innen liegende Bereich. Die auf das Anflanschen zurückgehenden Druckspannungen werden also aus dem oben genannten kritischen und radial innen liegenden Bereich des Scheibenflansches in den radial außen liegenden Bereich verlagert, so daß die Gefahr von Rißbildungen drastisch reduziert ist.

Mit anderen Worten bildet die erfindungsgemäße Flanschfläche des Scheibenflansches in an die Radnabe angeflanschtem, aber unverspanntem Zustand einen sich in einer die Drehachse enthaltenden Längsschnittebene nach radial innen öffnenden keilförmigen Spalt oder Zwischenraum aus. Wird dieser Spalt bzw. Zwischenraum durch Verspannen, etwa mit entsprechenden Axialschrauben geschlossen, so wird die daraus resultierende Spannung und der daraus resultierende Druck nahezu ausschließlich im radial außen liegenden Bereich auftreten, wohingegen der kritische radial innen liegende Bereich davon entlastet ist.

Neben der Entlastung des kritischen Bereichs von der Druckspannung wird durch die Erfindung auch der für die durch Reibschluß bewirkte Übertragung des Bremsmomentes wirksame Radius vergrößert, was einer Relativbewegung der Bremsscheibe gegenüber dem Radflansch vorbeugt.

Erfindungsgemäß bevorzugt ist der oben genannte spitze Winkel größer als 0,2°. Vorteilhafterweise liegt er im Bereich von 0,2° bis 3,5°, bevorzugt 0,5° bis 1,5° und weiter bevorzugt 0,8° bis 1,2°.

Erfindungsgemäß ist vorgesehen, daß in einer Längsschnittebene ein radial innerer Bereich der Flanschfläche derjenigen Ebene näher ist, in der eine Reibfläche der Bremsscheibe liegt, als ein radial äußerer Bereich der Flanschfläche.

Durch diese Ausgestaltung wird das oben erwähnte Verlagern der Druckspannungen in den radial äußeren Bereich des Scheibenflansches bewirkt.

Der Scheibenflansch weist erfindungsgemäß weiter bevorzugt in der Draufsicht entlang der Drehachse mindestens einen sich nach radial außen erstreckenden und Flanschfläche tragenden Ansatz auf.

Mit anderen Worten wird nach dieser Ausgestaltung der Erfindung der Scheibenflansch nicht über seinen gesamten Umfang, sondern nur lokal radial vergrößert, um in diesem radial vergrößerten Bereich die oben erwähnten Druckspannungen aufzunehmen. Vorteilhafterweise wird in einem solchen Falle die Verspannungseinrichtung, beispielsweise in Form einer Schraube, die sich durch eine entsprechende Durchgangsöffnung des Flansches erstreckt, in dem Bereich des Ansatzes liegen, um den Ansatz zu verspannen.

Die Erfindung ist aber nicht auf einen einzelnen Ansatz beschränkt. Vielmehr ist es erfindungsgemäß bevorzugt vorgesehen, daß der Scheibenflansch in der Draufsicht entlang der Drehachse eine mäanderartige Außenkontur mit einer Mehrzahl Ansätzen und jeweils zwischen zwei Ansätzen liegenden Einschnitten hat, wobei die Ansätze jeweils eine Öffnung zum Aufnehmen einer Befestigungseinrichtung zum Befestigen an der Radnabe aufweisen.

Bei dieser Ausgestaltung werden also mehrere Befestigungseinrichtungen, beispielsweise in Form von sich durch entsprechende Durchgangsöffnungen erstreckenden Schrauben verwendet, und überall dort, wo solche Befestigungseinrichtungen sind, wird der Scheibenflansch in Radialrichtung vergrößert, um einen gesonderten Bereich zum Aufnehmen der mittels der Befestigungseinrichtungen erzeugten Druckspannung zu schaffen.

Der Scheibenflansch, der Scheibentopf und der Reibring können erfindungsgemäß prinzipiell beliebig ausgestaltet und miteinander kombiniert sein. Erfindungsgemäß bevorzugt ist es aber, daß der Scheibenflansch einstückig mit dem Scheibentopf und/oder der Scheibentopf einstückig mit dem Reibring ausgebildet ist/sind.

Die Erfindung ist insbesondere sinnvoll bei Bremsscheiben für Nutzfahrzeuge, also bei Scheiben mit vergleichsweise großem Durchmesser. Erfindungsgemäß bevorzugt beträgt daher der Scheibendurchmesser 375 mm bis 525 mm, weiter bevorzugt 376 mm, 430 mm, 432 mm, 433 mm oder 525 mm.

Weiter bevorzugt ist es erfindungsgemäß vorgesehen, daß die Bremsscheibe innenbelüftet ist.

Neben der oben im einzelnen beschriebenen Bremsscheibe schafft die Erfindung auch ein Landfahrzeug, insbesondere Nutzfahrzeug, nach Anspruch 9.

Erfindungsgemäß bevorzugt ist das Landfahrzeug mit einer oben im einzelnen erläuterten Bremsscheibe ausgestattet.

Im folgenden ist die Erfindung anhand eines bevorzugten Ausführungsbeispiels unter Bezugnahme auf die beiliegende Zeichnung mit weiteren Einzelheiten näher erläutert. Dabei zeigt
- Figur 1: einen Längsschnitt durch eine Bremsscheibe nach einem Ausführungsbeispiel der Erfindung mit strichliert dargestellter Radnabe,

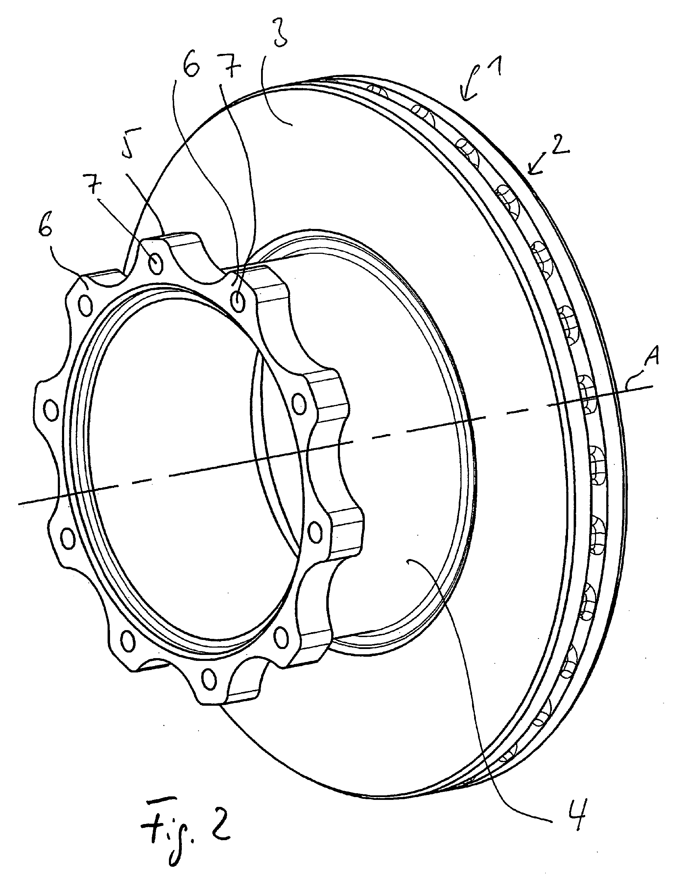

- Figur 2: eine perspektivische Darstellung der Bremsscheibe nach Figur 1,
- Figur 3: eine Draufsicht auf die Bremsscheibe nach Figur 1 und
- Figur 4: schematisch einen Teil einer herkömmlichen Bremsscheibe sowie den entsprechenden Teil einer erfindungsgemäßen Bremsscheibe im Vergleich hinsichtlich der Spannungen im Falle des Anflanschens.

Die in der Zeichnung dargestellte Bremsscheibe ist insgesamt mit der Bezugszahl 1 bezeichnet. Sie weist zwei Reibringe auf, die beispielsweise über Stege, Noppen, Rippen o.ä. unter Bildung eines Kühlkanals miteinander verbunden sind und Reibflächen 2, 3 aufweisen, gegen die in der Zeichnung nicht dargestellte Bremsbeläge einer Scheibenbremse beim Bremsen angedrückt werden. Die Drehachse der Bremsscheibe 1 ist mit A bezeichnet.

Die Bremsscheibe 1 weist einen Scheibentopf 4 auf, der hier beispielsweise mit dem Reibring mit der Reibfläche 3 einstückig ausgebildet ist.

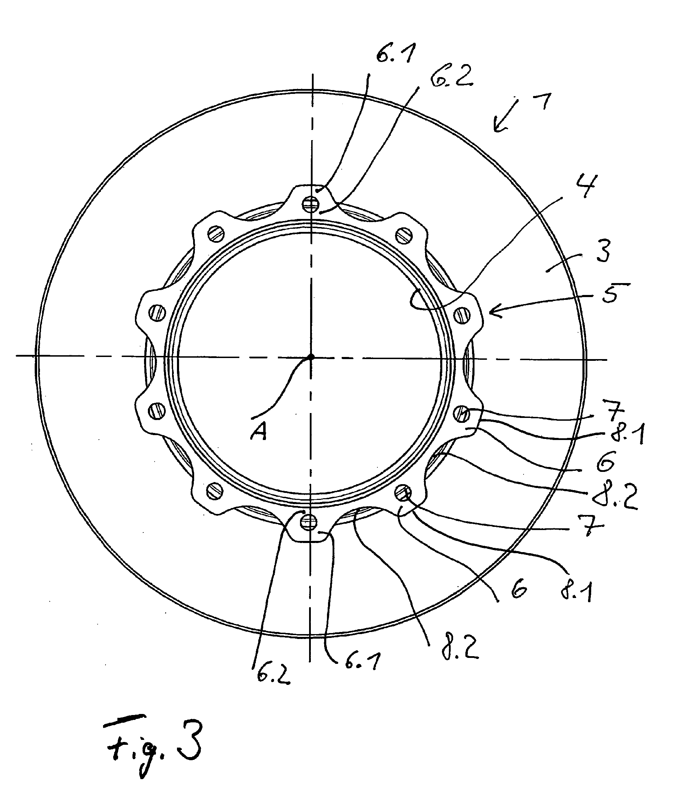

Der Scheibentopf 4 weist an einem seiner Enden einen einstückig damit und sich nach radial auswärts erstreckenden Scheibenflansch 5 mit einer Flanschfläche 6 auf. Der Scheibenflansch 5 hat in der Ansicht nach Figur 3 eine mäanderförmige Außenkontur, die in Wellenbergen oder Ansätzen 8.1 und Wellentälern bzw. Einschnitten 8.2 resultiert. Die Wellenberge oder Ansätze 8.1 weisen jeweils mindestens eine Durchgangsbohrung 7 auf.

Größe, Form und Krümmungsradien der Wellenberge oder Ansätze 8.1 bzw. der Wellentäler oder Einschnitte 8.2 können symmetrisch oder unsymmetrisch sein, denn die Auslegung bzw. Dimensionierung hängt von den Bremsscheibengrößen und deren projektierten Belastungen ab. Sie sind also abhängig vom jeweils geplanten Einsatz. Durch die Mäanderform wird eine Vielzahl von Kontaktzonen gebildet, die gemeinsam eine Flanschfläche 6 des Scheibenflansches 5 bilden. Die Flanschfläche 6 beschreibt einen Kegelmantel, weil sie in dem dargestellten Ausführungsbeispiel mit einer Normalen auf die Drehachse A einen Winkel α einschließt, der in dem dargestellten Ausführungsbeispiel 1,0° beträgt.

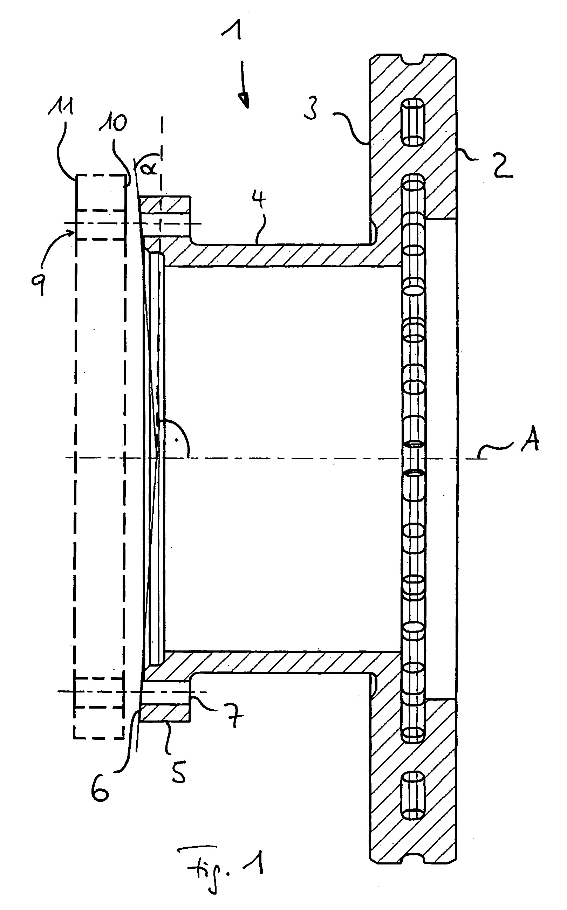

Der Scheibenflansch 5 mit der unter dem Winkel α angestellten Flanschfläche 6 liegt in der Darstellung nach Figur 1 einer gestrichelt gezeigten Radnabe 11 mit einer ebenen und senkrecht zur Drehachse A liegenden Flanschfläche 10 gegenüber. Dabei weist die Radnabe 11 ein dem Lochbild des Scheibenflansches 5 entsprechendes Lochbild auf, so daß mittels Verschraubungen 9 ein Anflanschen unter Kraftschluß erfolgen kann. Die Art der Verschraubungen bzw. deren Durchführung ist fallabhängig. Bei dem in der Zeichnung dargestellten Ausführungsbeispiel erfolgt die Schraubendurchführung durch die entsprechenden Öffnungen in der Radnabe 11, und erfolgt das Einschrauben in die Durchgangsöffnungen 7, die als Gewindebohrungen ausgestaltet sind. Zwar kann die Form/Gestaltung der Radnabe fallabhängig sein, jedoch weist sie immer eine Flanschfläche 10 auf. Hierbei sei aber angemerkt, daß je nach Anwendungsfall diese Flanschfläche 10 nicht zwangsläufig senkrecht zur Drehachse A verlaufen muß, sondern auch eine annähernd dem Winkel α verlaufende Gegenfläche unter der Bedingung abbilden kann, daß die Winkeldifferenz zur Ausbildung eines im Längsschnitt keilförmigen Zwischenraumes erhalten bleibt. Denn auch hier tritt durch die entsprechende Wahl des Winkels α der erfindungsgemäße Effekt ein.

Liegen die beiden Flanschflächen 6 und 10 entsprechend Figur 1 unverschraubt einander gegenüber, so stellt sich ein Winkelspalt zwischen den beiden genannten Flächen ein, der dem Anstellwinkel α entspricht. Die Größe des Winkels α ist ebenfalls abhängig vom Anwendungsfall der Bremsscheibe, von deren Größe und von deren Materialien, weshalb der in der Zeichnung gezeigte Winkel von ca. 1,0° als nur eines von vielen Beispielen anzusehen ist. Der keilförmige Spalt zwischen den beiden Flanschflächen 10 und 6 öffnet sich nach radial innen.

Wird nun die Bremsscheibe 1 mit der Radnabe 11 verschraubt, so schließt sich wegen der damit einhergehenden Verformung des Scheibenflansches 5 der Spalt zwischen den beiden Flanschflächen 10 und 6. Die dadurch erzeugte Druckspannung tritt im wesentlichen im radial außen liegenden Bereich 6.1 der Flanschfläche 6 auf, wohingegen der radial innen liegende Bereich 6.2 im wesentlichen spannungsfrei ist. Dadurch sind die nachteiligen, herkömmlicherweise zum Scheibentopf 4 hin auftretenden kritischen Druckspannungen minimiert oder gar eliminiert.

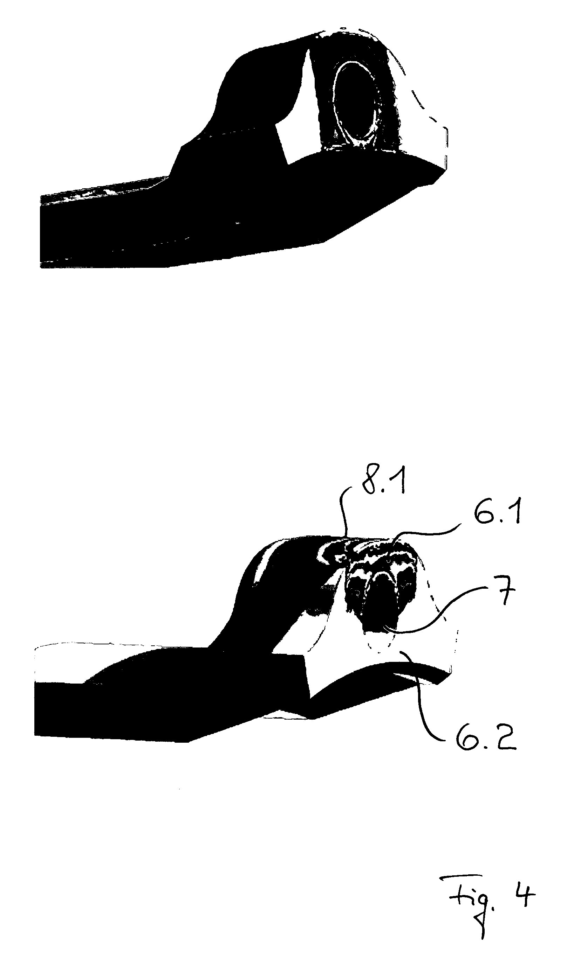

In diesem Zusammenhang wird verwiesen auf die vergleichende Darstellung der Figur 4, wonach die dort eingezeichneten Druckspannungen bei der herkömmlichen Bremsscheibe (oberes Bild) mehr oder weniger gleichmäßig über den Flanschbereich 6 verteilt sind, wohingegen sie sich bei der erfindungsgemäßen Ausgestaltung der Bremsscheibe (untere Darstellung) auf den radial außen liegenden Bereich 6.1 konzentrieren. Der radial außen liegende Bereich 6.1 wird dabei von den Wellenbergen bzw. Ansätzen 8.1 gebildet, die insofern insbesondere die Aufgabe haben, die oben genannten Druckspannungen aufzunehmen, damit der erwähnte kritische Bereich davon verschont wird.

Die oben beschriebene Bremsscheibe ist einstückig. Die erfindungsgemäße Lösung kann aber auch bei Bremsscheiben angewendet werden, die keine Innenbelüftung aufweisen, sondern vielmehr nach Art einer Vollscheibe ausgebildet sind. Die Einstückigkeit kann auch durch Verbundguß realisiert sein, wenn es darum geht, den Bremsscheibentopf mit dem Reibring zu verbinden. Ebenso sind beispielsweise auch hier Verschraubungen und/oder andere formschlüssige Verbindungen anwendbar, weil allen Bremsscheibenanordnungen gemeinsam ist, daß sie mittels radialem Flanschbereich an einer Radnabe befestigt werden. Der radiale Flanschbereich kann sich auch nach radial einwärts erstrecken, denn auch hier ist die erfindungsgemäße Anstellung der Flanschfläche realisierbar. In diesem Falle wird sich allerdings der jeweilige Ansatz (als durchgehender Flansch oder als Wellenberg) nach radial innen erstrecken, und es wird der radial innen liegende Flanschbereich zur Aufnahme der auftretenden Druckspannungen dienen.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Bremsscheibe für ein Landfahrzeug, insbesondere ein Nutzfahrzeug, mit
einer Drehachse (A),
einem Reibring,
einem Scheibentopf (4) und
einem Scheibenflansch (5) zum verspannenden Anflanschen an eine Radnabe (11) des Fahrzeugs, wobei der Scheibenflansch eine Flanschfläche (6) aufweist, die in angeflanschtem Zustand flächig an einer Flanschfläche (10) der Radnabe anliegt,
**dadurch gekennzeichnet, daß**
die Flanschfläche in nicht angeflanschtem Zustand in einer die Drehachse enthaltenden Längsschnittebene mit einer Normalen auf die Drehachse einen spitzen Winkel (α) einschließt und einen Kegelmantel beschreibt, wobei
in einer Längsschnittebene ein radial innerer Bereich (6.2) der Flanschfläche (6) derjenigen Ebene näher ist, in der eine Reibfläche (3) der Bremsscheibe liegt, als ein radial äußerer Bereich (6.1) der Flanschfläche (6).

2. Bremsscheibe nach Anspruch 1, **dadurch gekennzeichnet, daß** der Winkel (α) größer als 0,2° ist.

3. Bremsscheibe nach Anspruch 1 oder 2, **dadurch gekennzeichnet, daß** der Winkel (α) im Bereich von 0,2° bis 3,5°, bevorzugt 0,5° bis 1,5° und weiter bevorzugt 0,8° bis 1,2° liegt.

4. Bremsscheibe nach einem der vorangehenden Ansprüche, **dadurch gekennzeichnet, daß** der Scheibenflansch (5) in der Draufsicht entlang der Drehachse (A) mindestens einen sich nach radial außen erstreckenden und Flanschfläche (6) tragenden Ansatz (8.1) aufweist.

5. Bremsscheibe nach einem der vorangehenden Ansprüche, **dadurch gekennzeichnet, daß** der Scheibenflansch (5) in der Draufsicht entlang der Drehachse (A) eine mäanderartige Außenkontur mit einer Mehrzahl Ansätzen (8.1) und jeweils zwischen zwei Ansätzen liegenden Einschnitten (8.2) hat, wobei die Ansätze jeweils eine Öffnung (7) zum Aufnehmen einer Befestigungseinrichtung zum Befestigen an der Radnabe aufweisen.

6. Bremsscheibe nach einem der vorangehenden Ansprüche, **dadurch gekennzeichnet, daß** der Scheibenflansch (5) einstückig mit dem Scheibentopf (4) und/oder der Scheibentopf einstückig mit dem Reibring ausgebildet ist/sind.

7. Bremsscheibe nach einem der vorangehenden Ansprüche, **dadurch gekennzeichnet, daß** der Scheibendurchmesser im Bereich von 375 mm bis 525 mm liegt und vorzugsweise 375 mm, 430 mm, 432 mm, 433 mm oder 525 mm beträgt.

8. Bremsscheibe nach einem der vorangehenden Ansprüche, **dadurch gekennzeichnet, daß** sie innenbelüftet ist.

9. Landfahrzeug, insbesondere Nutzfahrzeug, mit
einer Radnabe (11) mit einer ersten Flanschfläche (10),
einer Bremsscheibe (1) mit einer Drehachse (A) und einer zweiten Flanschfläche (6), die bei an der Radnabe angebrachter Bremsscheibe an der ersten Flanschfläche anliegt, und
einer Einrichtung zum Verspannen der Bremsscheibe mit der Radnabe in angebrachtem Zustand,
**dadurch gekennzeichnet, daß**
die zweite Flanschfläche (6) einen Kegelmantel beschreibt, wobei in einer Längsschnittebene ein radial innerer Bereich (6.2) der Flanschfläche (6) derjenigen Ebene näher ist, in der eine Reibfläche (3) der Bremsscheibe liegt, als ein radial äußerer Bereich (6.1) der Flanschfläche (6), und
die beiden Flanschflächen (10, 6) in unverspanntem Zustand zwischeneinander einen sich in einer die Drehachse enthaltenden Längsschnittebene nach radial innen öffnenden keilförmigen Zwischenraum begrenzen und in verspanntem Zustand flächig aneinander anliegen.

10. Landfahrzeug nach Anspruch 9 mit einer Bremsscheibe nach einem der Ansprüche 1 bis 8.

## Claims

1. Brake disc for a land vehicle, in particular a utility vehicle, having
an axis of rotation (A),
a friction ring,
a disc chamber (4) and
a disc flange (5) for flange-mounting, with bracing action, on a wheel hub (11) of the vehicle, wherein the disc flange has a flange surface (6) which, in the flange-mounted state, bears areally against a flange surface (10) of the wheel hub,
**characterized in that**,
in a longitudinal section plane which comprises the axis of rotation, the flange surface, in the non-flange-mounted state, encloses an acute angle (α) with a normal to the axis of rotation and describes a conical envelope, wherein
in a longitudinal section plane, a radially inner region (6.2) of the flange surface (6) is situated closer than a radially outer region (6.1) of the flange surface (6) to the plane in which a friction surface (3) of the brake disc is situated.

2. Brake disc according to Claim 1, **characterized in that** the angle (α) is greater than 0.2°.

3. Brake disc according to Claim 1 or 2, **characterized in that** the angle (α) lies in the range from 0.2° to 3.5°, preferably 0.5° to 1.5°, and more preferably 0.8° to 1.2°.

4. Brake disc according to one of the preceding claims, **characterized in that**, as seen in a plan view along the axis of rotation (A), the disc flange (5) has at least one radially outwardly extending projection (8.1) which bears the flange surface (6).

5. Brake disc according to one of the preceding claims, **characterized in that**, as seen in the plan view along the axis of rotation (A), the disc flange (5) has a meandering outer contour with a multiplicity of projections (8.1) and with indentations (8.2) situated in each case between two projections, wherein the projections each have an opening (7) for receiving a fastening means for the fastening to the wheel hub.

6. Brake disc according to one of the preceding claims, **characterized in that** the disc flange (5) is formed in one piece with the disc chamber (4), and/or the disc chamber is formed in one piece with the friction ring.

7. Brake disc according to one of the preceding claims, **characterized in that** the disc diameter lies in the range from 375 mm to 525 mm, and is preferably 375 mm, 430 mm, 432 mm, 433 mm or 525 mm.

8. Brake disc according to one of the preceding claims, **characterized in that** said brake disc is internally ventilated.

9. Land vehicle, in particular utility vehicle, having
a wheel hub (11) with a first flange surface (10),
a brake disc (1) with an axis of rotation (A) and with a second flange surface (6) which, when the brake disc is attached to the wheel hub, bears against the first flange surface, and
a means for bracing the brake disc with the wheel hub in the attached state,
**characterized in that**
the second flange surface (6) describes a conical envelope, wherein, in a longitudinal section plane, a radially inner region (6.2) of the flange surface (6) is situated closer than a radially outer region (6.1) of the flange surface (6) to the plane in which a friction surface (3) of the brake disc is situated, and,
in a longitudinal section plane which comprises the axis of rotation, the two flange surfaces (10, 6), in the non-braced state, delimit between them a wedge-shaped intermediate space which opens in a radially inward direction, and in the braced state, bear areally against one another.

10. Land vehicle according to Claim 9, having a brake disc according to one of Claims 1 to 8.

## Revendications

1. Disque de frein pour un véhicule routier, en particulier un véhicule utilitaire, comprenant un axe de rotation (A),
une bague de frottement,
une nacelle de disque (4) et
une bride de disque (5) pour le bridage avec serrage sur un moyeu de roue (11) du véhicule, la bride de disque présentant une surface de bride (6) qui, dans l'état bridé, s'applique à plat contre une surface de bride (10) du moyeu de roue, **caractérisé en ce que**
la surface de bride, dans l'état non bridé, forme un angle aigu (α) dans un plan de coupe longitudinal contenant l'axe de rotation avec une normale à l'axe de rotation et décrit une enveloppe sphérique,
une région radialement interne (6.2) de la surface de bride (6), dans le plan de coupe longitudinale, étant plus proche du plan dans lequel se situe une surface de friction (3) du disque de frein qu'une région radialement extérieure (6.1) de la surface de bride (6).

2. Disque de frein selon la revendication 1, **caractérisé en ce que** l'angle (α) est supérieur à 0,2°.

3. Disque de frein selon la revendication 1 ou 2, **caractérisé en ce que** l'angle (α) est situé dans une plage de 0,2° à 3, 5°, de préférence de 0,5° à 1,5°, et particulièrement préférablement de 0,8° à 1,2°.

4. Disque de frein selon l'une quelconque des revendications précédentes, **caractérisé en ce que** la bride de disque (5), présente, en vue de dessus, le long de l'axe de rotation (A), au moins une saillie (8.1) s'étendant radialement vers l'extérieur et portant la surface de bride (6).

5. Disque de frein selon l'une quelconque des revendications précédentes, **caractérisé en ce que** la bride de disque (5) présente, en vue de dessus, le long de l'axe de rotation (A), un contour extérieur en forme de méandre avec une pluralité de saillies (8.1) et des entailles (8.2) situées à chaque fois entre deux saillies, les saillies présentant à chaque fois une ouverture (7) pour recevoir un dispositif de fixation pour la fixation au moyen de roue.

6. Disque de frein selon l'une quelconque des revendications précédentes, **caractérisé en ce que** la bride de disque (5) est réalisée d'une seule pièce avec la nacelle de disque (4) et/ou la nacelle de disque est réalisée d'une seule pièce avec la bague de friction.

7. Disque de frein selon l'une quelconque des revendications précédentes, **caractérisé en ce que** le diamètre du disque est de l'ordre de 375 mm à 525 mm et de préférence vaut 375 mm, 430 mm, 432 mm, 433 mm ou 525 mm.

8. Disque de frein selon l'une quelconque des revendications précédentes, **caractérisé en ce qu'**il est ventilé de l'intérieur.

9. Véhicule routier, en particulier véhicule utilitaire, comprenant
un moyeu de roue (11) avec une première surface de bride (10),
un disque de frein (1) avec un axe de rotation (A) et une deuxième surface de bride (6) qui s'applique contre la première surface de bride lorsque le disque de frein est monté sur le moyeu, et
un dispositif pour serrer le disque de frein au moyeu de roue dans l'état monté,
**caractérisé en ce que**
la deuxième surface de bride (6) décrit une enveloppe conique, où, dans un plan de coupe longitudinal, une région radialement interne (6.2) de la surface de bride (6) est plus proche du plan dans lequel se situe une surface de friction (3) du disque de frein qu'une région radialement extérieure (6.1) de la surface de bride (6), et
les deux surfaces de bride (10, 6), dans l'état non serré, délimitent entre elles un espace intermédiaire en forme de clavette s'ouvrant radialement vers l'intérieur dans un plan de coupe longitudinale contenant l'axe de rotation et, dans l'état serré, s'appliquent à plat l'une contre l'autre.

10. Véhicule routier selon la revendication 9, comprenant un disque de frein selon l'une quelconque des revendications 1 à 8.
